# EUROPEAN PATENT SPECIFICATION

(11) **EP 4 457 442 B1**
(45) Date of publication and mention of the grant of the patent: **27.05.2026**
(21) Application number: 22915368.9
(22) Date of filing: 28.12.2022
(51) Int. Cl.: F16B 31/00, F42B 3/00, B64G 1/64, F42C 15/34

(54) **EXPLOSIVE BOLT**
SPRENGBOLZEN
BOULON EXPLOSIF

(30) Priority: 30.12.2021 IL 29002921
(43) Date of publication of application: 06.11.2024
(73) Proprietor: ISRAEL AEROSPACE INDUSTRIES LTD., 7010000 Lod (IL)
(72) Inventor: KRAIZMAN, Yaacov, 7010000 Lod (IL); LAHAV, Tal, 7010000 Lod (IL); ASSAF, Dori, 7010000 Lod (IL)
(74) Representative: Plasseraud IP
(86) International application number: PCT/IL2022/051401
(87) International publication number: WO 2023/126933

(56) References cited:
- DE-A1- 102012 018 600
- KR-B1- 102 124 079
- RU-C1- 2 705 859
- US-A- 3 188 914
- US-A- 3 237 521

## Description

### TECHNOLOGICAL FIELD

The presently disclosed subject matter relates to explosive bolts, in particular to explosive bolts that are used for separating two connected components.

### BACKGROUND

Explosive bolts are well known and have many uses. Some such uses include aerospace applications, including for example such use in space vehicles as well as multistage rocket or missile configurations.

By way of non-limiting example, US 10,989,243 discloses an explosive bolt for securing a brace in tension. The bolt includes a bar, a pair of explosives, a pair of detonators and a pair of anchors. The bar has opposing longitudinal ends and an outer thickness. Opposing bores extend inwardly from the longitudinal ends to corresponding depth ends. First and second notches reduce the thickness proximate to the corresponding depth ends. A center rod separates the notches from each other. Each explosive correspondingly inserts into a corresponding bore to a corresponding depth end. Each detonator correspondingly inserts into the corresponding bore. Each anchor secures the bar to the brace.

Also by way of non-limiting example, RU2705859 relates to space engineering, particularly, to separation bolts. Separation bolt for connection and subsequent fast disconnection of structure elements as per instruction includes power casing, charge and electric detonator.

Also by way of non-limiting example, US 5,402,728 relates to a releasable attaching apparatus for attaching a portion of a first object to a portion of a second object. The attaching apparatus has an attaching member with walls defining a cavity therein. A rapidly expanding material is placed within the cavity such that when the material is caused to expand, the attaching member will break at a failure zone located adjacent to the cavity. The rapidly expanding material is a composition that undergoes a phase change from a solid to a liquid, wherein the volume of the liquid is larger than the volume of the solid. In operation, an initiator triggers the phase change which causes a pressure buildup in the cavity, thereby loading the attaching member and causing it to break at the failure zone. Accordingly, the first and second objects are freed from one another.

Also by way of non-limiting example, US 4,316,412 discloses a low voltage, electrically actuated, nonprimary explosive detonator wherein said detonation is achieved by means of an explosive train in which a deflagration-to-detonation transition is made to occur. The explosive train is confined within a cylindrical body and positioned adjacent to low voltage ignition means have electrical leads extending outwardly from the cylindrical confining body. Application of a low voltage current to the electrical leads ignites a self-sustained deflagration in a donor portion of the explosive train which then is made to undergo a transition to detonation further down the train.

Also by way of non-limiting example, US 3,792,662 discloses a system for the removal of an attachment from one end of a detonating device prior to the detonation of the main charge.

Also by way of non-limiting example, US 3,530,759 discloses a severable element for use as a quick-disconnect connecting means and for other uses, comprising: a body; a chamber extending from an outer end of the body; a quantity of material in the inner end of the chamber which is substantially incompressible and is capable of being spread under pressure without disintegrating; an annular groove in the body defining a circumferential severing area of reduced cross-section; the inner end of said material being proximate said severing area; and means for applying pressure to said material to deform it and sever said element including a plunger having its inner end adjacent said material.

Also by way of non-limiting example, US 3,196,746 discloses a releasable fastener which can be instantaneously severed at a predetermined location and which is characterized by substantially shrapnel-free and nonleaking operation, comprising: (a) an elongated housing adapted to engage with associated elements, said elongated housing having a central longitudinal bore closed at one end and containing in sequence from said end (b) a base charge of a high velocity detonating explosive, (c) a priming charge in propagating relationship to the base charge, (d) a rigid compression plunger contiguous to the priming charge, said plunger being slidably mounted in and peripherally engaged by the bore, (e) a plug of a pressure-extrudable material contiguous to said plunger and peripherally engaged by the bore, (f) rigid closure means contiguous to said plug and closing said bore, said closure means, plug and compression plunger each having an aperture therethrough which is substantially coaxial with the bore of said housing, and a length of low-energy detonation-transmitting cord extending through the aperture in the closure means and plug and terminating in propagating relationship to the priming charge, said cord being peripherally engaged by the wall of said aperture in the closure means and comprising a continuous core of explosive encased in a ductile metal sheath, said plug being in tight peripheral engagement with the sheath.

Also by way of general background, RU 2705859 discloses a breaking bolt for connection and subsequent quick disconnection of structural elements on command, which is a load-bearing body in which a blasting explosive charge and an electric detonator are installed, consisting of an electric igniter with an active charge, and a radiant-action primer-detonator the gap between the bottom of which and the blasting explosive charge should be no more than 4 mm, with sequentially pressed into it charges, which is distinguished by the fact that an obturator is installed between the electric igniter and the primer-detonator, which is a metal sleeve with an internal channel of variable diameter, installed on a thread in the power case.

### GENERAL DESCRIPTION

The invention is an explosive bolt as defined by claim 1, an explosive bolt system as defined by claim 11, a connection system as defined by claim 14, a method for selectively engaging two elements to one another as defined by claim 15 and a method for producing an explosive bolt as defined by claim 16.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
- **Fig. 1**: is a cross-section side view of an explosive bolt system according to a first example of the presently disclosed subject matter.
- **Fig. 2**: is a cross-section side view of part of the example of Fig. 1.
- **Fig. 3**: is a cross-section side view of the example of Fig. 1 in engaged relationship with two elements.
- **Fig. 4**: is a cross-section side view of the example of Fig. 1 schematically illustrating a contiguous explosive train between the respective detonator and the respective explosive bolt.

### DETAILED DESCRIPTION

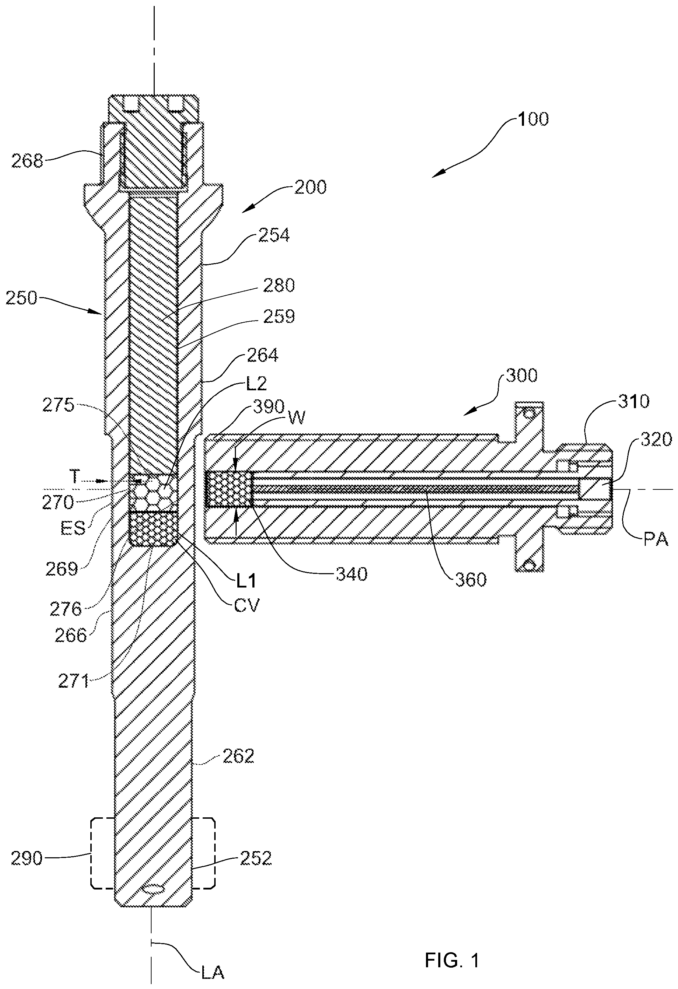

Referring to Fig. 1, an explosive bolt system according to a first example of the presently disclosed subject matter, generally designated **100** comprises an explosive bolt **200** and an initiator device **300.**

The explosive bolt **200** (also interchangeably referred to herein as any one of "bolt", "connection bolt" or "explosive connection bolt") comprises a shank **250** and a head **268.** The shank **250** has a longitudinal axis **LA,** a first longitudinal end **252** and an opposed second longitudinal end **254.**

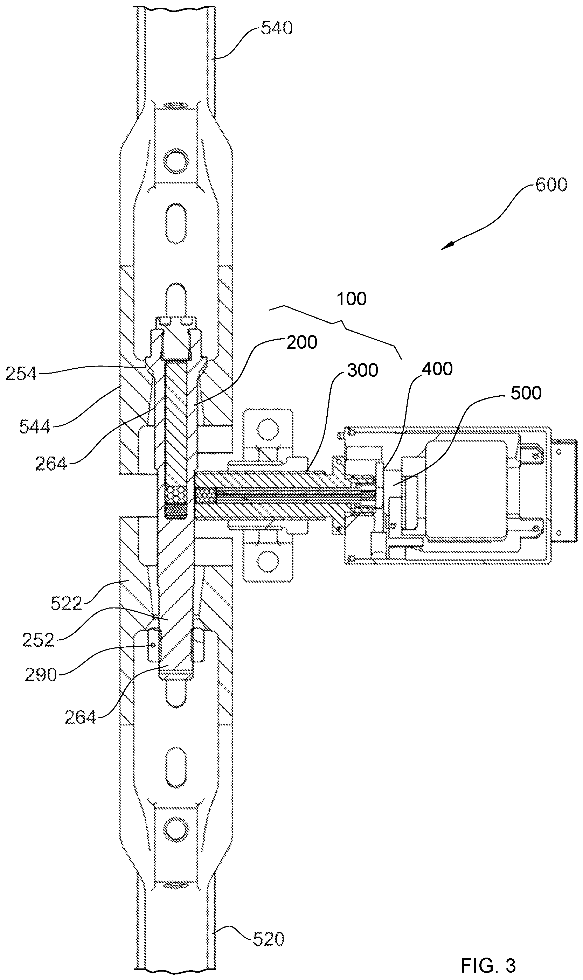

Referring also to Fig. 3, the explosive bolt **200** is configured for securing two elements **520, 540** together between the first longitudinal end **252** and the second longitudinal end **254.** For example, the two elements **520, 540** can each be a respective end fitting at the respective one of two ends of the respective strap of a Marman clamp that circumferentially holds together two components, for example two stages of a multistage rocket.

In at least this example, and referring again to Fig. 1, the shank **250** includes a threaded portion **262** at the first longitudinal end **242,** a grip portion **264** at the second longitudinal end **242,** and a failure zone portion **266** between the grip portion **264** and the threaded portion **262.**

The head **268** is juxtaposed with the grip portion **264,** and is configured for being grippable by a suitable tool, for example a spanner, for enabling the explosive bolt **200** to the turned about the longitudinal axis **LA.**

The threaded portion **262** comprises an external thread typically complementary to an internal thread of a nut **290.**

Referring again to Fig. 3, the grip portion **264** together with the head **268** are generally configured for cooperating with a respective portion **544** of one element **540,** while the threaded portion **262** together with nut **290** are generally configured for cooperating with a respective portion **522** of the other element **520,** thereby enabling the two elements **520, 540** to be secured together via the explosive bolt **200.**

In at least this example, the grip portion **264,** the failure zone portion **266** and the threaded portion **262** are integrally formed with one another to form an integral shank **250.** Furthermore in at least this example, the head **268,** the grip portion **264,** the failure zone portion **266** and the threaded portion **262** are integrally formed with one another.

The shank **250** is configured with an internal chamber **270,** which at least in this example is located partially or wholly at a corresponding chamber portion **269** of the failure zone portion **266.** The chamber **270** thus comprises a lower chamber base **271,** upper chamber end **275** and inner peripheral surface **276,** which together define the chamber volume **CV** of internal chamber **270.** The peripheral surface **276** together with the external surface **ES** of the shank **250** at the failure zone portion **266,** in particular at the chamber portion **269,** define the wall thickness **T** of a chamber portion **269** of the failure zone portion **266** corresponding to the chamber **270.**

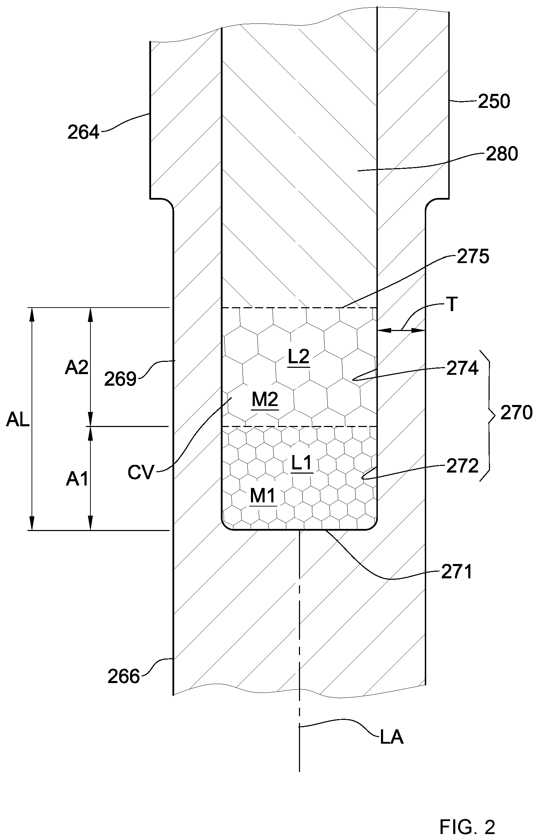

Referring also to Fig. 2, the chamber **270** accommodates a first layer **L1** of a first high density secondary explosive material **M1**, and further accommodates a second layer **L2** of a second low density secondary explosive material **M2.** The first layer **L1** is accommodated in a first chamber portion **272** of the chamber **270,** and the second layer **L2** is accommodated in a second chamber portion **274** of the chamber **270.**

The first layer **L1** is in arming communication with the second layer **L2** in the chamber **270.**

The term "arming communication" as used herein refers to the type of communication or contact between first high density secondary explosive material **M1** accommodated in first layer **L1**, and the second low density secondary explosive material **M2** accommodated in second layer **L2,** that is such as to establish a contiguous explosive train between second layer **L2** and the first layer **L1**. For example, such "arming communication" between the second layer **L2** and the first layer **L1** allows a detonation wave to travel from the second secondary material **M2** accommodated in the second layer **L2** to the first high density secondary explosive material **M1** accommodated in first layer **L1**, thereby causing first high density secondary explosive material **M1** accommodated in first layer **L1** to detonate.

The first layer **L1** is in abutting contact with the second layer **L2** in the chamber **270.** In at least this example, the first layer **L1** is longitudinally juxtaposed with the second layer **L2** along the longitudinal axis **LA.**

The first layer **L1** has a first axial length **A1** along the longitudinal axis **LA,** and the second layer **L2** has a second axial length **A2** along the longitudinal axis **LA.**

In at least this example, the summation of the first axial length **A1** and the second axial length **A2** nominally corresponds to the axial length **AL** of the chamber **270.** However, in alternative variations of this example, the summation of the first axial length **A1** and the second axial length **A2** is less than the axial length **AL** of the chamber **270,** providing a corresponding headspace, which can contain air for example.

In at least this example, the first axial length **A1** is shorter than the second axial length **A2.** Such an arrangement can, in at least some applications of this example, reduce the need for high tolerance in the alignment between the explosive bolt **200** and the initiator device **300,** in particular, in the alignment between the initiator device **300** and the second layer **L2.**

For example, a ratio between the second axial length **A2** and the first axial length **A1** can be in the range of between about 1.05 and about 1.20.

In at least one example, first axial length **A1** can be about 4.9mm, and the second axial length **A2** can be about 5.4mm.

In other alternative variation of these examples, the first axial length **A1** can be the same length or greater than the second axial length **A2.**

In the above or other examples, the internal chamber **270** can have an internal diameter of about 7mm.

In at least this example the chamber **270** has uniform transverse cross-section along the full axial length **AL** thereof. Furthermore, the transverse cross-section is axisymmetric, in particular circular, providing a uniform wall thickness **T** for the chamber portion **269.**

In at least some examples, for example in the illustrated example, such a thickness **T** can be about 2.5mm, for example.

Referring again to Fig. 1, the chamber **270** constitutes an end part of a longitudinal bore **259** extending longitudinally from an outer longitudinal end of the head **268** up to lower chamber base **271.** A plug member **280** is provided, configured for sealingly closing part of the bore **259,** extending longitudinally from the outer longitudinal end of the head **268** (or close thereto) up to upper chamber end **275,** thereby creating the chamber **270.**

In alternative variations of this example, the transverse cross-sections of the chamber **270** can be non-circular, and/or, the chamber **270** has a non-uniform transverse cross-section along the full axial length **AL** thereof.

In at least one such example, the chamber **270,** or part thereof can have a frustoconical shape in which the transverse cross-sectional area decreases in a direction from the second longitudinal end **254** to the first longitudinal end **252.**

In at least one other such example, the chamber **270** has a stepped longitudinal configuration. In such an example, the first chamber portion **272** corresponding to, and coextending along the first axial length **A1** of, the first layer **L1**, and the second chamber portion **274** corresponding to, and coextending along the second axial length **A2** of, the second layer **L2,** have different transverse widths and/or cross-sectional areas. In such an example, for example, the diameter of the first chamber portion **272** can be greater than, or less than, the diameter of the second chamber portion **274.** For example, an annular sleeve can be provided in the bore **259,** and having an internal lumen corresponding to the plug member **280,** to thereby provide the respective first chamber portion **272** and the respective second chamber portion **274.**

In at least one other such example, the chamber **270** has a transverse offset configuration, wherein the first chamber portion **272** (corresponding to, and coextending along the first axial length **A1** of, the first layer **L1**), is transversely offset with respect to the second chamber portion **274** (corresponding to, and coextending along the second axial length **A2** of, the second layer **L2**). In such an example, for example, the diameter of the first chamber portion **272** can be greater than, equal to, or less than, the diameter of the second chamber portion **274.** However, the central longitudinal axis of the first chamber portion **272** is not coaxial with the central longitudinal axis of the second chamber portion **274** but is instead transversely spaced with respect thereto. Furthermore, the central longitudinal axis of the first chamber portion **272** and/or the central longitudinal axis of the second chamber portion **274** is/are not coaxial with the longitudinal axis **LA.** In such examples, the wall thickness **T** of the respective chamber portion **269,** in particular of the respective first chamber portion **272** and/or of the second chamber portion **274** is correspondingly not uniform circumferentially with respect to the longitudinal axis **LA.** In at least one such example, the wall thickness **T** can have a minimum magnitude at a circumferential part of the chamber portion **269** that is intended to be facing the initiator device **300** during operation of the explosive bolt system **100.**

In at least one other such example, the chamber **270** has a non-axisymmetric or non-circular transverse cross-section, for example along part or all of the first axial length **A1** of the first chamber portion **272,** and/or along part or all of the second axial length **A2** of the second chamber portion **274.**

In at least the illustrated example, and referring again to Fig. 1, the first layer **L1** and the first chamber portion **272** are closer than the second layer **L2** and the second chamber portion **274** with respect to the first longitudinal end **252.** Thus in at least this example, the second layer **L2** and the second chamber portion **274** are closer than the first layer **L1** and the first chamber portion **272** with respect to the second longitudinal end **254.** However, in at least some alternative variations of this example, first layer **L1** and the first chamber portion **272** are closer than the second layer **L2** and the second chamber portion **274** with respect to the second longitudinal end **254,** and, the second layer **L2** and the second chamber portion **274** are closer than the first layer **L1** and the first chamber portion **272** with respect to the first longitudinal end **252.**

The shank **250,** head **268** and plug member **280** can be made from any suitable material capable of supporting the respective mechanical loads while the explosive bolt **200** is securing the two elements **520, 540.** In at least this example, the shank **250,** head **268** and plug member **280** are made from stainless steel, for example.

According to an aspect of the presently disclosed subject matter, the explosive bolt **200** comprises only secondary explosive material, and is devoid of any primary explosive material.

In the art, explosive materials are generally classified as being primary explosive materials or secondary explosive materials based on the sensitivity of the explosive materials to initiation or detonation. In general, primary explosive materials are susceptible to being detonated by the application of sufficient heat, which can originate from an ignition source, application of friction or other mechanical force, for example. On the other hand, in general secondary explosive materials are safer to handle and detonate only under specific conditions including the use of a detonator or an initiator device, for example initiator device **300.**

In at least this example, the first secondary explosive material **M1** and the first secondary explosive material **M2** are the same secondary explosive material. However, in alternative variations of this example, the first secondary explosive material **M1** and the first secondary explosive material **M2** are different from one another, i.e., are different secondary explosive materials one from the other.

For example, the first secondary explosive material **M1** and/or the first secondary explosive material **M2** can include nitroaromatics, for example TNT.

For example, the first secondary explosive material **M1** and/or the first secondary explosive material **M2** can include nitramines, for example RDX or CH-6.

In these or other examples, and according to an aspect of the presently disclosed subject matter, the first secondary explosive material **M1** and/or the first secondary explosive material **M2** comply at least with the US Department of Defense Design Criteria Standard, Safety Criteria for Fuze Design, MIL-STD-131, for example MIL-STD-131F, for example any one of the approved Explosives as listed in Table I:

**Table I - Approved Explosives**

| **Explosive** | **Specification** |
|---|---|
| Comp A3 | MIL-DTL-440 |
| Comp A4 | MIL-DTL-440 |
| Comp A5 | MIL-DTL-14970 |
| Comp CH6 | MIL-C-21723 |
| DIPAM | WS-4660 |
| HNS Type 1 or Type 2 Gr A | WS-5003 |
| HNS-IV | MIL-E-82903 |
| LX-14 | MIL-H-48358 |
| PBX 9407 | MIL-R-63419 |
| PBXN-5 | MIL-E-81111 |
| PBXN-6 | WS-12604 |
| PBXN-7 | MIL-DTL-82874 |
| PBXN-9 | MIL-DTL-82875 |
| PBXN-11 | MIL-DTL-32064 |
| PBXN-301 | MIL-E-82740 |
| PBXN-12 | MIL-DTL-3228 |

The first layer **L1** is accommodated in a first chamber portion **272** of the chamber **270,** and comprises a first quantity of high density first secondary explosive material **M1**, i.e., in this first quantity of the first secondary explosive material **M1**, the first secondary explosive material **M1** is provided at a first density **DN1.** The second layer **L2** is accommodated in a second chamber portion **274** of the chamber **270,** and comprises a second quantity of high density second secondary explosive material **M2**, i.e., in this second quantity of the second secondary explosive material **M2,** the second secondary explosive material **M2** is provided at a second density **DN2.** The second quantity of the second secondary explosive material **M2** at second density **DN2** is sufficient to be detonated by the initiator device **300** during operation of the system **100,** and sufficient for detonating the first secondary explosive material **M1** accommodated in the first layer **L1**. The first quantity of high density first secondary explosive material **M1** at first density **DN1** is sufficient to ensure, when detonated, that the explosive bolt **200** breaks and separates into two sections at the failure zone portion **266.**

For example, the first quantity of the first secondary explosive material **M1** can be the same magnitude as the second quantity of the second secondary explosive material **M2;** for example, the first quantity of the first secondary explosive material **M1** is within ±5% of the second quantity of the second secondary explosive material **M2**by weight. For example, the first quantity of the first secondary explosive material **M1** and the second secondary explosive material **M2** can each be about 300mg. In alternative variations of this example, the first quantity of the first secondary explosive material **M1** can be greater or less than the second quantity of the second secondary explosive material **M2**.

The first density **DN1** is different from the second density **DN2.** The first density **DN1** is greater than the second density **DN2;** furthermore, the first density **DN1** is considered to be a "high density" as compared with second density **DN2,** which is considered low density as compared with the first density **DN1.**

For example, the first density **DN1** can be a density of 1.6 g/cm³ ±0.05 g/cm³, while the second density **DN2** can be a density of 1.4 g/cm³ ±0.05 g/cm³.

In at least this example, the first quantity of first secondary material **M1**, for example in powder form, is inserted into the first chamber portion **272** via the bore **259,** when the plug member **280** is not present. A suitable first compressing tool can then be inserted into the bore **259** and into abutting contact with the first secondary material **M1** in the first chamber portion **272** via the bore **259.** The first secondary material **M1** can then be compressed via the compressing tool until the first density **DN1** is achieved for the first secondary material **M1**, thereby providing the first layer **L1**. For example, such a compressing tool can comprise a bar having diameter slightly smaller than the inside diameter of the bore **259,** and of sufficient axial length such that when fully inserted in the bore an end of the tool projects outside of the open end of the head **268.** A suitable mechanical stop can be provided for the compression tool and located at a calibrated location such as to limit longitudinal penetration into the bore **259** and chamber **270,** and thus prevent excessive compression of the first secondary material **M1**. The second quantity of second secondary material **M2,** for example in powder form, can then be inserted into the second chamber portion **274,** and added directly over the existing first layer **L1**, via the bore **259,** absent plug member **280,** for example via a suitable second compressing tool that similarly ensures the require second density **DN2** is achieved for the second secondary material **M2**. Thereafter, the plug member **280** can be sealingly inserted into the bore **259,** isolating the chamber **270** and its contents from the outside of the explosive bolt **200.**

Thus, according to a method for producing such an explosive bolt, essentially the first quantity of first secondary explosive material **M1** is inserted into the internal chamber and a first compression pressure is applied thereto via the first compressing tool to form the first layer **L1** of the high density said first secondary explosive material. Then, the second quantity of second secondary explosive material **M2** is inserted into the internal chamber over the said first layer **L1** and a second compression pressure is applied thereto via the second compressing tool to form the second layer **L2** of low density said second secondary explosive material. The first compression pressure is greater than the second compression pressure. The first compression pressure is thus sufficient to compress the first secondary explosive material **M1** to the first density **DN1,** and the second compression pressure is thus sufficient to compress the second secondary explosive material **M2** to the second density **DN2.**

Referring again to Fig. 1, the initiator device **300** is configured for selectively initiating detonation of the explosive bolt **200,** as will become clearer herein.

The initiator device **300** has a propagation axis **PA,** and comprises a booster secondary explosive element material **320** operatively connected to an initiator secondary explosive material **340** via a command chord **360.**

The booster secondary explosive element material **320** is provided at one longitudinal end **310** of the initiator device **300,** and the booster secondary explosive element material **320** is operatively connected to the safe and arm device **400** in operation of the system **100.**

The initiator secondary explosive material **340** is provided at the opposed longitudinal end **390** of the initiator device **300.**

The booster secondary explosive element material **320,** the initiator secondary explosive material **340** and the command chord **360** are each secondary explosive materials. The booster secondary explosive element material **320,** the initiator secondary explosive material **340** and the command chord **360** can be the same secondary explosive material with respect to one another, or, the booster secondary explosive element material **320,** the initiator secondary explosive material **340** and the command chord **360** can be different secondary explosive materials with respect to one another. For example, the booster secondary explosive element material **320** and/or the initiator secondary explosive material **340** and/or the command chord **360** can include nitroaromatics, for example TNT, or can include nitramines, for example RDX or CH-6. In these or other examples, and according to an aspect of the presently disclosed subject matter, the booster secondary explosive element material **320** and/or the initiator secondary explosive material **340** and/or the command chord **360** comply at least with the US Department of Defense Design Criteria Standard, Safety Criteria for Fuze Design, MIL-STD-131, for example MIL-STD-131F, for example any one of the approved Explosives as listed in Table I above.

The booster secondary explosive element material **320** and/or the initiator secondary explosive material **340** and/or the command chord **360** can be the same secondary explosive materials as, or can be different from, the first secondary explosive material **M1** and/or the first secondary explosive material **M2**.

According to an aspect of the presently disclosed subject matter, the initiator device **300** comprises only secondary explosive material, and is devoid of any primary explosive material.

The initiator device **300** is positioned, particularly in alignment, with respect to the explosive bolt **200** such that the initiator device **300** is in arming communication with the explosive bolt **200.** In particular, the initiator device **300** is positioned with respect to the explosive bolt **200** such that the initiator secondary explosive material **340** is in arming communication with the explosive bolt **200.** More in particular, the initiator device **300** is positioned with respect to the explosive bolt **200** such that the initiator secondary explosive material **340** is in arming communication with the chamber **270.** More in particular, the initiator device **300** is positioned with respect to the explosive bolt **200** such that the initiator secondary explosive material **340** is in arming communication with the second layer **L2.**

The term "arming communication" as also used herein refers to the type of communication or contact ultimately between initiator secondary explosive material **340** and the second secondary material **M2** accommodated in the second layer **L2** that is such as to establish a contiguous explosive train between the initiator device **300** and the explosive bolt **200.** For example, such "arming communication" between the initiator device **300** and the explosive bolt **200** allows a detonation wave to travel from the initiator device **300** to the explosive bolt **200,** in particular from the initiator secondary explosive material **340** to the second secondary material **M2** accommodated in the second layer **L2,** thereby causing the second secondary material **M2** accommodated in the second layer **L2** to detonate.

In at least this example, the initiator device **300** is positioned with respect to the explosive bolt **200** such that the initiator secondary explosive material **340** is facing, and in close proximity to or in abutment with, the explosive bolt **200.**

In particular, the initiator device **300** is positioned with respect to the explosive bolt **200** such that initiator secondary explosive material **340** is facing, and in close proximity to or in abutment with, the failure zone portion **266.**

More in particular, the initiator device **300** is positioned with respect to the explosive bolt **200** such that initiator secondary explosive material **340** is facing, and in close proximity to or in abutment with, the chamber portion **269.**

More in particular, the initiator device **300** is positioned with respect to the explosive bolt **200** such that initiator secondary explosive material **340** is facing, and in close proximity to or in abutment with, a part of the chamber portion **269** corresponding to the second layer **L2.**

In at least this example, the width **W** of the initiator secondary explosive material **340** in a direction parallel to the longitudinal axis **LA** of the explosive bolt **200** is about the same magnitude as the second axial length **A2.**

In at least this example, the propagation axis **PA** is orthogonal to the longitudinal axis **LA.** Furthermore in at least this example, the propagation axis **PA** intersects the longitudinal axis **LA.**

However, in at least some alternative variations of this example, the propagation axis **PA** can be at any suitable non-parallel angular orientation with respect to the longitudinal axis **LA,** for example any one of 30°, 45°, 60°, 80°. Additionally or alternatively, in such examples the propagation axis **PA** does not intersect the longitudinal axis **LA** and is instead the propagation axis **PA** is offset with respect to the longitudinal axis **LA.** However, in such cases, the orientation and relative spatial disposition of the propagation axis **PA** with respect to the longitudinal axis **LA** is still such that the initiator secondary explosive material **340** is ion arming communication with the second layer **L2,** for example facing, and in close proximity to or in abutment with the external wall of the first chamber portion **272** corresponding to the second layer **L2.**

Referring also to Fig. 3, when the system **100** is used as part of a connection system **600** for selectively engaging two elements to one another, for example, the initiator device **300** is operatively coupled to a detonator **500** via a safe and arm device **400.** In at least this example, the detonator **500** and the safe and arm device **400** are together configured as an integral and self-contained component, and provides isolation of the relatively insensitive secondary explosives of the initiator device **300** from external stimuli that could otherwise transfer enough energy to initiate the detonator **500.** Such isolation can be provided by a mechanical barrier between the detonator **500** and the secondary explosives of the initiator device **300** when the safe and arm device **400** is in the safe mode, and the mechanical barrier is an integral part of the safe and arm device **400.** The mechanical barrier operates to block transmission of any explosive shock from the detonator to the initiator device **300** that may occur in response to any such stimuli. In the armed mode, the mechanical barrier is removed, and is replaced with a transfer lead that allows energy from the detonator **500** to flow to the secondary explosives of initiator device **300** and detonate the same, typically in response to the detonator **500** receiving a command signal from a controller, for example when it is desired to separate the two elements **520, 540.**

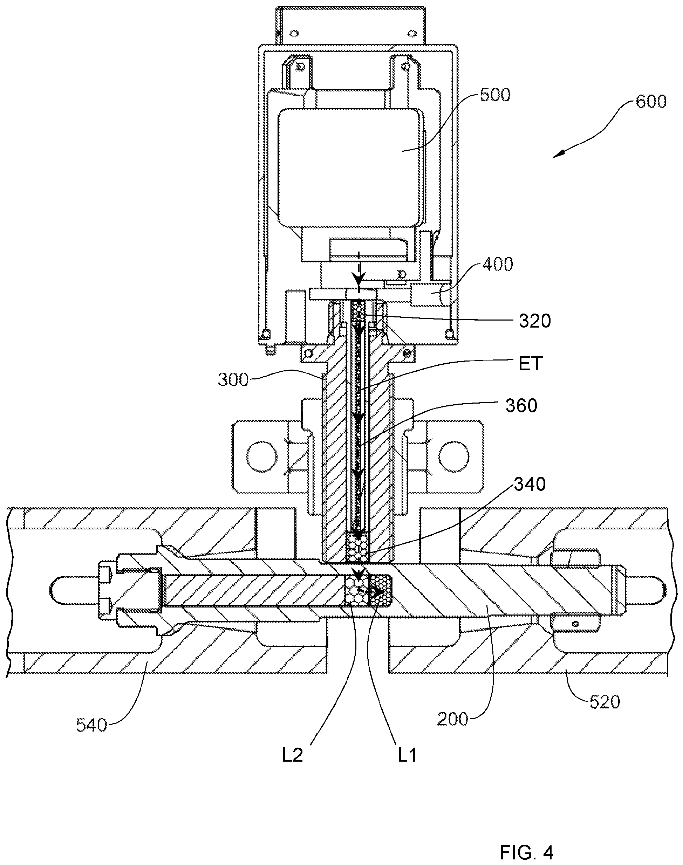

In operation of the system **100** in such a connection system **600,** and referring to Fig. 4, a command signal is transmitted to the detonator **500** and the safe and arm device **400.** The safe and arm device **400** switches to arm mode from safe mode, by removing the mechanical barrier between the detonator **500** and the initiator device **300.** The detonator **500** initiates and establishes a contiguous explosive train **ET** between the detonator **500** and the explosive bolt **200.** Responsive to receiving such a command signal, the detonator **500** generates a detonation wave that travels from the detonator **500** through the safe and arm device **400** and to the initiator device **300,** detonating first the booster secondary explosive element material **320,** which in turn detonates the initiator secondary explosive material **340** via propagation of the detonation wave through the command chord **360.** Detonation of the initiator secondary explosive material **340** causes the detonation wave in the contiguous explosive train **ET** to detonate the second secondary material **M2** accommodated in the second layer **L2,** which in turn causes the first secondary material **M1** accommodated in the first layer **L1** to detonate. The detonation of the first secondary material **M1** accommodated in the first layer **L1** in the final portion of the contiguous explosive train **ET** results in the rupture or break of the explosive bolt **200,** in particular at the failure zone portion **266,** in the vicinity of the chamber portion **269,** which splits and separates the explosive bolt **200** into two major portions, thereby disengaging the elements **520, 540** from one another.

In the method claims that follow, alphanumeric characters and Roman numerals used to designate claim steps are provided for convenience only and do not imply any particular order of performing the steps.

Finally, it should be noted that the word "comprising" as used throughout the appended claims is to be interpreted to mean "including but not limited to".

While there has been shown and disclosed examples in accordance with the presently disclosed subject matter, it will be appreciated that many changes may be made therein without departing from the scope of the presently disclosed subject matter as set out in the claims.

## Claims

1. An explosive bolt (200) comprising a shank (250) having a first longitudinal and (252) an opposed second longitudinal end (254) and a longitudinal axis (LA), the explosive bolt (200) being configured for securing two elements (520, 540) together between said first longitudinal end (252) and said second longitudinal end (254); the shank (250) including an internal chamber (270) accommodating a first layer (L1) of a high density first secondary explosive material (M1) wherein the first secondary explosive material (M1) is provided at a first density (DN1), and further accommodating a second layer (L2) of a low density second secondary explosive material (M2) wherein the second secondary explosive material (M2) is provided at a second density (DN2), the second layer (L2) being in abutting contact with the first layer (L1), and wherein the first density (DN1) is greater than the second density (DN2).

2. The explosive bolt (200) according to claim 1, wherein said first layer (L1) has a first axial length (A1) along said longitudinal axis (LA), wherein said second layer (L2) has a second axial length (A2) along said longitudinal axis (LA), and wherein said first axial length (A1) is shorter than said second axial length (A2).

3. The explosive bolt (200) according to any one of claims 1 to 2, wherein the first layer (L1) is accommodated in a first chamber portion (272) of the internal chamber (270) and comprises a first quantity of said high density first secondary explosive material (M1), and wherein the second layer (L2) is accommodated in a second chamber portion (274) of the internal chamber (270) and comprises a second quantity of said low density second secondary explosive material (M2), and wherein optionally said first quantity is about the same as said second quantity.

4. The explosive bolt (200) according to any one of claims 1 to 3, wherein said first secondary explosive material (M1) comprises said first density (DN1), and wherein said second secondary explosive material (M2) comprises said second density (DN2), wherein said first density (DN1) is about 1.6 g/cm³ ±0.05 g/cm³, and wherein said second density (DN2) is about 1.4 g/cm³ ±0.05 g/cm³.

5. The explosive bolt (200) according to any one of claims 1 to 4, wherein each one of said first secondary explosive material (M1) and said second secondary explosive material (M2) includes any one of nitroaromatics and nitramines.

6. The explosive bolt (200) according to any one of claims 1 to 5, wherein each one of said first secondary explosive material (M1) and said second secondary explosive material (M2) complies at least with the US Department of Defense Design Criteria Standard, Safety Criteria for Fuze Design, designated MIL-STD-131.

7. The explosive bolt (200) according to any one of claims 1 to 6, wherein said first secondary explosive material (M1) and said second secondary explosive material (M2) are the same secondary explosive material, or, wherein said first secondary explosive material (M1) and said second secondary explosive material (M2) are different secondary explosive materials with respect to one another.

8. The explosive bolt (200) according to any one of claims 1 to 7, wherein said explosive bolt (200) is devoid of primary explosive materials.

9. The explosive bolt (200) according to any one of claims 1 to 8, wherein said second layer (L2) is in abutting contact with the first layer (L1).

10. The explosive bolt (200) according to any one of claims 1 to 9, wherein the first layer (L1) is longitudinally juxtaposed with the second layer (L2) along said longitudinal axis (LA).

11. Explosive bolt system (100), comprising:
- an explosive bolt (200) as defined in any one of claims 1 to 10;
- an initiator device (300) positioned with respect to the explosive bolt (200) such that the initiator device (300) is in arming communication with the explosive bolt (200) such as to establish a contiguous explosive train between the initiator device (300) and the explosive bolt (200).

12. The explosive bolt system (100) according to claim 11, wherein the initiator device (300) has a propagation axis (PA), and comprises a booster secondary explosive element material (320) operatively connected to an initiator secondary explosive material (340) via a command chord (360).

13. The explosive bolt system (100) according to claim 12, wherein the initiator device (300) is positioned with respect to the explosive bolt (200) such that the initiator secondary explosive material (340) is in arming communication with the explosive bolt (200) such as to establish a contiguous explosive train between the initiator secondary explosive material (340) and the explosive bolt (200), and/or wherein the initiator device (300) is positioned with respect to the explosive bolt (200) such that the initiator secondary explosive material (340) is in arming communication with the internal chamber (270) such as to establish a contiguous explosive train between the initiator secondary explosive material (340) and the internal chamber (270), and/or wherein the initiator device (300) is positioned with respect to the explosive bolt (200) such that the initiator secondary explosive material (340) is in arming communication with the second layer (L2) such as to establish a contiguous explosive train between the initiator secondary explosive material (340) and the second layer (L2).

14. A connection system for selectively engaging two elements (520, 540) to one another, comprising:
- an explosive bolt system (100) as defined in any one of claims 11 to 13, wherein one longitudinal end of the explosive bolt (200) is coupled to one of said elements (520, 540), and another longitudinal end of the bolt (200) is coupled to the other one of said elements (520, 540);
- a detonator and safe and arm device (400), operatively coupled to the explosive bolt system (100).

15. A method for selectively engaging two elements (520, 540) to one another, comprising:
(a) providing an explosive bolt system (100) as defined in any one of claims 11 to 13;
(b) coupling one longitudinal end of the explosive bolt (200) to one of said elements (520, 540), and coupling another longitudinal end of the bolt (200) to the other one of said elements (520, 540);
(c) operatively coupling a detonator and safe and arm device (400) to the explosive bolt system (100).

16. A method for producing an explosive bolt (200) comprising:
- providing a shank (250) having a first longitudinal end (252), an opposed second longitudinal end (254) and a longitudinal axis (LA), the shank (250) including an internal chamber (270);
- inserting a first quantity of first secondary explosive material (M1) in the internal chamber (270) and applying a first compression pressure thereto to form a first layer (L1) of a high density said first secondary explosive material;
- inserting a second quantity of second secondary explosive material (M2) in the internal chamber (270) over the first layer (L1) and applying a second compression pressure thereto to form a second layer (L2) of a low density said second secondary explosive material;
- wherein said first compression pressure is greater than said second compression pressure;
and wherein optionally:
said first material and said second materials are each provided in powder form, and/or wherein said first quantity is about the same as said second quantity, and/or wherein said first compression pressure compresses the first secondary explosive material (M1) to a first density, and wherein said second compression pressure compresses said second secondary explosive material (M2) to a second density, wherein said first density is about 1.6 g/cm³ ±0.05 g/cm³, and wherein said second density is about 1.4 g/cm³ ±0.05 g/cm³, and/or wherein each one of said first secondary explosive material (M1) and said second secondary explosive material (M2) includes any one of nitroaromatics and nitramines, and/or wherein each one of said first secondary explosive material (M1) and said second secondary explosive material (M2) complies at least with the US Department of Defense Design Criteria Standard, Safety Criteria for Fuze Design, designated MIL-STD-131, and/or wherein said first secondary explosive material (M1) and said second secondary explosive material (M2) are the same secondary explosive material or wherein said first secondary explosive material and said second secondary explosive material are different secondary explosive materials with respect to one another.

## Patentansprüche

1. Sprengbolzen (200), umfassend einen Schaft (250), welcher ein erstes longitudinales (252) und ein entgegengesetztes zweites longitudinales Ende (254) sowie eine longitudinale Achse (LA) aufweist, wobei der Sprengbolzen (200) dazu eingerichtet ist, zwei Elemente (520, 540) zusammen zwischen dem ersten longitudinalen Ende (252) und dem zweiten longitudinalen Ende (254) zu sichern; wobei der Schaft (250) eine innere Kammer (270) umfasst, welche eine erste Schicht (L1) eines ersten Sekundärexplosivmaterials (M1) mit hoher Dichte aufnimmt, wobei das erste Sekundärexplosivmaterial (M1) mit einer ersten Dichte (DN1) bereitgestellt ist, und ferner eine zweite Schicht (L2) eines zweiten Sekundärexplosivmaterials (M2) mit niedriger Dichte aufnimmt, wobei das zweite Sekundärexplosivmaterial (M2) mit einer zweiten Dichte (DN2) bereitgestellt ist, wobei die zweite Schicht (L2) in anliegendem Kontakt mit der ersten Schicht (L1) ist, und wobei die erste Dichte (DN1) größer als die zweite Dichte (DN2) ist.

2. Sprengbolzen (200) nach Anspruch 1, wobei die erste Schicht (L1) entlang der longitudinalen Achse (LA) eine erste axiale Länge (A1) aufweist, wobei die zweite Schicht (L2) entlang der longitudinalen Achse (LA) eine zweite axiale Länge (A2) aufweist, und wobei die erste axiale Länge (A1) kürzer als die zweite axiale Länge (A2) ist.

3. Sprengbolzen (200) nach einem der Ansprüche 1 bis 2, wobei die erste Schicht (L1) in einem ersten Kammerabschnitt (272) der inneren Kammer (270) aufgenommen ist und eine erste Menge des ersten Sekundärexplosivmaterials (M1) mit hoher Dichte umfasst, und wobei die zweite Schicht (L2) in einem zweiten Kammerabschnitt (274) der inneren Kammer (270) aufgenommen ist und eine zweite Menge des zweiten Sekundärexplosivmaterials (M2) mit niedriger Dichte umfasst, und wobei die erste Menge optional ungefähr das gleiche beträgt wie die zweite Menge.

4. Sprengbolzen (200) nach einem der Ansprüche 1 bis 3, wobei das erste Sekundärexplosivmaterial (M1) die erste Dichte (DN1) umfasst, und wobei das zweite Sekundärexplosivmaterial (M2) die zweite Dichte (DN2) umfasst, wobei die erste Dichte (DN1) ungefähr 1,6 g/cm³ ± 0,05 g/cm³ beträgt, und wobei die zweite Dichte (DN2) ungefähr 1,4 g/cm³ ± 0,05 g/cm³ beträgt.

5. Sprengbolzen (200) nach einem der Ansprüche 1 bis 4, wobei jedes aus dem ersten Sekundärexplosivmaterial (M1) und dem zweiten Sekundärexplosivmaterial (M2) ein jegliches aus Nitroaromaten und Nitraminen umfasst.

6. Sprengbolzen (200) nach einem der Ansprüche 1 bis 5, wobei jedes aus dem ersten Sekundärexplosivmaterial (M1) und dem zweiten Sekundärexplosivmaterial (M2) wenigstens den US-Verteidigungsministerium-Designkriterien-Standard, Sicherheitskriterien für Zünder-Design, als MIL-STD-131 bezeichnet, einhält.

7. Sprengbolzen (200) nach einem der Ansprüche 1 bis 6, wobei das erste Sekundärexplosivmaterial (M1) und das zweite Sekundärexplosivmaterial (M2) ein Sekundärexplosivmaterial der gleichen Kategorie sind, oder wobei das erste Sekundärexplosivmaterial (M1) und das zweite Sekundärexplosivmaterial (M2) in Bezug aufeinander unterschiedliche Sekundärexplosivmaterialien sind.

8. Sprengbolzen (200) nach einem der Ansprüche 1 bis 7, wobei der Sprengbolzen (200) frei von primären Explosivmaterialien ist.

9. Sprengbolzen (200) nach einem der Ansprüche 1 bis 8, wobei die zweite Schicht (L2) in anliegendem Kontakt mit der ersten Schicht (L1) ist.

10. Sprengbolzen (200) nach einem der Ansprüche 1 bis 9, wobei die erste Schicht (L1) entlang der longitudinalen Achse (LA) mit der zweiten Schicht (L2) longitudinal nebeneinandergestellt ist.

11. Sprengbolzensystem (100), umfassend:
- einen Sprengbolzen (200) nach einem der Ansprüche 1 bis 10;
- eine Initiatorvorrichtung (300), welche in Bezug auf den Sprengbolzen (200) derart positioniert ist, dass die Initiatorvorrichtung (300) mit dem Sprengbolzen (200) in scharfgeschalteter Kommunikation ist, um zwischen der Initiatorvorrichtung (300) und dem Sprengbolzen (200) eine zusammenhängende Sprengkette zu etablieren.

12. Sprengbolzensystem (100) nach Anspruch 11, wobei die Initiatorvorrichtung (300) eine Ausbreitungsachse (PA) aufweist und ein Verstärker-Sekundärexplosivelementmaterial (320) umfasst, welches mittels eines Befehlsträgerflansches (360) betriebsfähig mit einem Initiator-Sekundärexplosivmaterial (340) verbunden ist.

13. Sprengbolzensystem (100) nach Anspruch 12, wobei die Initiatorvorrichtung (300) in Bezug auf den Sprengbolzen (200) derart positioniert ist, dass das Initiator-Sekundärexplosivmaterial (340) in scharfgeschalteter Kommunikation mit dem Sprengbolzen (200) ist, um zwischen dem Initiator-Sekundärexplosivmaterial (340) und dem Sprengbolzen (200) eine zusammenhängende Sprengkette zu etablieren, und/oder wobei die Initiatorvorrichtung (300) in Bezug auf den Sprengbolzen (200) derart positioniert ist, dass das Initiator-Sekundärexplosivmaterial (340) in scharfgeschalteter Kommunikation mit der inneren Kammer (270) ist, um zwischen dem Initiator-Sekundärexplosivmaterial (340) und der inneren Kammer (270) eine zusammenhängende Sprengkette zu etablieren, und/oder wobei die Initiatorvorrichtung (300) in Bezug auf den Sprengbolzen (200) derart positioniert ist, dass das Initiator-Sekundärexplosivmaterial (340) in scharfgeschalteter Kommunikation mit der zweiten Schicht (L2) ist, um zwischen dem Initiator-Sekundärexplosivmaterial (340) und der zweiten Schicht (L2) eine zusammenhängende Sprengkette zu etablieren.

14. Verbindungssystem zum selektiven Eingreifen zweier Elemente (520, 540) miteinander, umfassend:
- ein Sprengbolzensystem (100) nach einem der Ansprüche 11 bis 13, wobei ein longitudinales Ende des Sprengbolzens (200) mit einem der Elemente (520, 540) gekoppelt ist, und wobei ein weiteres longitudinales Ende des Bolzens (200) mit dem anderen der Elemente (520, 540) gekoppelt ist;
- eine Detonator-und-Sicherung-und-Scharfstell-Vorrichtung (400), welche betriebsfähig mit dem Sprengbolzensystem (100) gekoppelt ist.

15. Verfahren zum selektiven Eingreifen zweier Elemente (520, 540) miteinander, umfassend:
(a) Bereitstellen eines Sprengbolzensystems (100) nach einem der Ansprüche 11 bis 13;
(b) Koppeln eines longitudinalen Endes des Sprengbolzens (200) mit einem der Elemente (520, 540) und Koppeln eines weiteren longitudinalen Endes des Bolzens (200) mit dem anderen der Elemente (520, 540);
(c) Betriebsfähiges Koppeln einer Detonator-und-Sicherung-und-Scharfstell-Vorrichtung (400) mit dem Sprengbolzensystem (100).

16. Verfahren zum Herstellen eines Sprengbolzens (200), umfassend:
- Bereitstellen eines Schafts (250), welcher ein erstes longitudinales Ende (252), ein entgegengesetztes zweites longitudinales Ende (254) sowie eine longitudinale Achse (LA) aufweist, wobei der Schaft (250) eine innere Kammer (270) umfasst;
- Einführen einer ersten Menge eines ersten Sekundärexplosivmaterials (M1) in die innere Kammer (270) und Ausüben eines ersten Kompressionsdrucks darauf, um eine erste Schicht (L1) des ersten Sekundärexplosivmaterials mit einer hohen Dichte zu bilden;
- Einführen einer zweiten Menge eines zweiten Sekundärexplosivmaterials (M2) in die innere Kammer (270) über der ersten Schicht (L1) und Ausüben eines zweiten Kompressionsdrucks darauf, um eine zweite Schicht (L2) des zweiten Sekundärexplosivmaterials mit einer niedrigen Dichte zu bilden;
- wobei der erste Kompressionsdruck größer als der zweite Kompressionsdruck ist;
und wobei, optional:
das erste Material und die zweiten Materialien jeweils in Pulverform bereitgestellt werden, und/oder wobei die erste Menge ungefähr das gleiche wie die zweite Menge beträgt, und/oder wobei der erste Kompressionsdruck das erste Sekundärexplosivmaterial (M1) auf eine erste Dichte komprimiert, und wobei der zweite Kompressionsdruck das zweite Sekundärexplosivmaterial (M2) auf eine zweite Dichte komprimiert, wobei die erste Dichte ungefähr 1,6 g/cm³ ± 0,05 g/cm³ beträgt, und wobei die zweite Dichte ungefähr 1,4 g/cm³ ± 0,05 g/cm³ beträgt, und/oder wobei jedes aus dem ersten Sekundärexplosivmaterial (M1) und dem zweiten Sekundärexplosivmaterial (M2) ein jegliches aus Nitroaromaten und Nitraminen umfasst, und/oder wobei jedes aus dem ersten Sekundärexplosivmaterial (M1) und dem zweiten Sekundärexplosivmaterial (M2) wenigstens den US-Verteidigungsministerium-Designkriterien-Standard, Sicherheitskriterien für Zünder-Design, als MIL-STD-131 bezeichnet, einhält, und/oder wobei das erste Sekundärexplosivmaterial (M1) und das zweite Sekundärexplosivmaterial (M2) ein Sekundärexplosivmaterial der gleichen Kategorie sind, oder wobei das erste Sekundärexplosivmaterial und das zweite Sekundärexplosivmaterial in Bezug aufeinander unterschiedliche Sekundärexplosivmaterialien sind.

## Revendications

1. Boulon (200) explosif comprenant une tige (250) présentant une première extrémité longitudinale (252) et une seconde extrémité longitudinale (254) opposée et un axe longitudinal (LA), le boulon (200) explosif étant configuré pour fixer deux éléments (520, 540) ensemble entre ladite première extrémité longitudinale (252) et ladite seconde extrémité longitudinale (254) ; la tige (250) comportant une chambre interne (270) logeant une première couche (L1) d'un premier matériau explosif secondaire (M1) de haute densité où le premier matériau explosif secondaire (M1) est fourni à une première densité (DN1), et logeant en outre une seconde couche (L2) d'un second matériau explosif secondaire (M2) de faible densité, où le second matériau explosif secondaire (M2) est fourni à une seconde densité (DN2), la seconde couche (L2) étant en contact de butée avec la première couche (L1), et dans lequel la première densité (DN1) est supérieure à la seconde densité (DN2).

2. Boulon (200) explosif selon la revendication 1, dans lequel ladite première couche (L1) présente une première longueur axiale (A1) le long dudit axe longitudinal (LA), dans lequel ladite seconde couche (L2) présente une seconde longueur axiale (A2) le long dudit axe longitudinal (LA), et dans lequel ladite première longueur axiale (A1) est plus courte que ladite seconde longueur axiale (A2).

3. Boulon (200) explosif selon l'une quelconque des revendications 1 à 2, dans lequel la première couche (L1) est logée dans une première partie de chambre (272) de la chambre interne (270) et comprend une première quantité dudit premier matériau explosif secondaire de haute densité (M1), et dans lequel la seconde couche (L2) est logée dans une seconde partie de chambre (274) de la chambre interne (270) et comprend une seconde quantité dudit second matériau explosif secondaire de faible densité (M2), et dans lequel ladite première quantité est facultativement environ la même que ladite seconde quantité.

4. Boulon (200) explosif selon l'une quelconque des revendications 1 à 3, dans lequel ledit premier matériau explosif secondaire (M1) comprend ladite première densité (DN1), et dans lequel ledit second matériau explosif secondaire (M2) comprend ladite seconde densité (DN2), dans lequel ladite première densité (DN1) est d'environ 1,6 g/cm³ ±0,05 g/cm³, et dans lequel ladite seconde densité (DN2) est d'environ 1,4 g/cm³ ±0,05 g/cm³.

5. Boulon (200) explosif selon l'une quelconque des revendications 1 à 4, dans lequel chacun dudit premier matériau explosif secondaire (M1) et dudit second matériau explosif secondaire (M2) inclut l'un quelconque parmi des nitroaromatiques et des nitramines.

6. Boulon (200) explosif selon l'une quelconque des revendications 1 à 5, dans lequel chacun dudit premier matériau explosif secondaire (M1) et dudit second matériau explosif secondaire (M2) est conforme au moins à la norme US Department of Defense Design Criteria Standard, Safety Criteria for Fuze Design, désignée sous MIL-STD-131.

7. Boulon (200) explosif selon l'une quelconque des revendications 1 à 6, dans lequel ledit premier matériau explosif secondaire (M1) et ledit second matériau explosif secondaire (M2) sont le même matériau explosif secondaire, ou, dans lequel ledit premier matériau explosif secondaire (M1) et ledit second matériau explosif secondaire (M2) sont des matériaux explosifs secondaires différents l'un de l'autre.

8. Boulon (200) explosif selon l'une quelconque des revendications 1 à 7, dans lequel ledit boulon (200) explosif est dépourvu de matériaux explosifs primaires.

9. Boulon (200) explosif selon l'une quelconque des revendications 1 à 8, dans lequel ladite seconde couche (L2) est en contact de butée avec la première couche (L1).

10. Boulon (200) explosif selon l'une quelconque des revendications 1 à 9, dans lequel la première couche (L1) est juxtaposée longitudinalement à la seconde couche (L2) le long dudit axe longitudinal (LA).

11. Système de boulon explosif (100), comprenant :
- un boulon (200) explosif selon l'une quelconque des revendications 1 à 10 ;
- un dispositif d'amorçage (300) positionné par rapport au boulon (200) explosif de sorte que le dispositif d'amorçage (300) soit en communication d'armement avec le boulon (200) explosif de manière à établir une chaîne de mise à feu contigüe entre le dispositif d'amorçage (300) et le boulon (200) explosif.

12. Système de boulon explosif (100) selon la revendication 11, dans lequel le dispositif d'amorçage (300) présente un axe de propagation (PA), et comprend un matériau d'élément explosif secondaire renforçateur d'amorçage (320) relié de manière opérationnelle à un matériau explosif secondaire d'amorçage (340) par le biais d'une corde de commande (360).

13. Système de boulon explosif (100) selon la revendication 12, dans lequel le dispositif d'amorçage (300) est positionné par rapport au boulon (200) explosif de sorte que le matériau explosif secondaire d'amorçage (340) soit en communication d'armement avec le boulon (200) explosif de manière à établir une chaîne de mise à feu contigüe entre le matériau explosif secondaire d'amorçage (340) et le boulon (200) explosif, et/ou dans lequel le dispositif d'amorçage (300) est positionné par rapport au boulon (200) explosif de sorte que le matériau explosif secondaire d'amorçage (340) soit en communication d'armement avec la chambre interne (270) de manière à établir une chaîne de mise à feu contigüe entre le matériau explosif secondaire d'amorçage (340) et la chambre interne (270), et/ou dans lequel le dispositif d'amorçage (300) est positionné par rapport au boulon (200) explosif de sorte que le matériau explosif secondaire d'amorçage (340) est en communication d'armement avec la seconde couche (L2) de manière à établir une chaîne de mise à feu contigüe entre le matériau explosif secondaire d'amorçage (340) et la seconde couche (L2).

14. Système de liaison pour mettre en prise sélective deux éléments (520, 540) l'un avec l'autre, comprenant :
- un système de boulon explosif (100) selon l'une quelconque des revendications 11 à 13, dans lequel une extrémité longitudinale du boulon (200) explosif est couplée à l'un desdits éléments (520, 540), et une autre extrémité longitudinale du boulon (200) est couplée à l'autre desdits éléments (520, 540) ;
- un détonateur et un dispositif de sûreté et d'armement (400), couplés de manière opérationnelle au système de boulon explosif (100).

15. Procédé de mise en prise sélective de deux éléments (520, 540) l'un avec l'autre, comprenant :
(a) la fourniture d'un système de boulon explosif (100) tel que défini selon l'une quelconque des revendications 11 à 13 ;
(b) le couplage d'une extrémité longitudinale du boulon (200) explosif à l'un desdits éléments (520, 540), et le couplage d'une autre extrémité longitudinale du boulon (200) à l'autre desdits éléments (520, 540) ;
(c) le couplage opérationnel d'un détonateur et d'un dispositif de sûreté et d'armement (400) au système de boulon explosif (100).

16. Procédé de production d'un boulon (200) explosif comprenant :
- la fourniture d'une tige (250) présentant une première extrémité longitudinale (252), une seconde extrémité longitudinale (254) opposée et un axe longitudinal (LA), la tige (250) comportant une chambre interne (270) ;
- l'insertion d'une première quantité de premier matériau explosif secondaire (M1) dans la chambre interne (270) et l'application d'une première pression de compression sur celle-ci pour former une première couche (L1) d'une haute densité dudit premier matériau explosif secondaire ;
- l'insertion d'une seconde quantité de second matériau explosif secondaire (M2) dans la chambre interne (270) sur la première couche (L1) et application d'une seconde pression de compression sur celle-ci pour former une seconde couche (L2) de faible densité dudit second matériau explosif secondaire ;
- dans lequel ladite première pression de compression est supérieure à ladite seconde pression de compression ;
et dans lequel facultativement :
ledit premier matériau et lesdits seconds matériaux sont chacun fournis sous forme de poudre, et/ou dans lequel ladite première quantité est environ la même que ladite seconde quantité, et/ou dans lequel ladite première pression de compression comprime le premier matériau explosif secondaire (M1) à une première densité, et dans lequel ladite seconde pression de compression comprime ledit second matériau explosif secondaire (M2) à une seconde densité, dans lequel ladite première densité est environ 1,6 g/cm³ ±0,05 g/cm³, et dans lequel ladite seconde densité est d'environ 1,4 g/cm³ ±0,05 g/cm³, et/ou dans lequel chacun dudit premier matériau explosif secondaire (M1) et dudit second matériau explosif secondaire (M2) inclut l'un quelconque parmi des nitroaromatiques et des nitramines, et/ou dans lequel chacun dudit premier matériau explosif secondaire (M1) et dudit second matériau explosif secondaire (M2) est au moins conforme à la norme US Department of Defense Design Criteria Standard, Safety Criteria for Fuze Design, désignée sous MIL-STD-131, et/ou dans lequel ledit premier matériau explosif secondaire (M1) et ledit second matériau explosif secondaire (M2) sont le même matériau explosif secondaire ou dans lequel ledit premier matériau explosif secondaire et ledit second matériau explosif secondaire sont des matériaux explosifs secondaires différents l'un de l'autre.
